# EUROPEAN PATENT APPLICATION

(11) **EP 0 615 156 A1**
(43) Date of publication of application: **14.09.1994**
(21) Application number: 94103018.1
(22) Date of filing: 01.03.1994
(51) Int. Cl.: G03B 42/04

(54) **Device for feeding X-ray film cassettes from a storage supply to a daylight loading and unloading unit**

(30) Priority: 10.03.1993 DE 4307531
(71) Applicant: EASTMAN KODAK COMPANY, Rochester, New York 14650-2201 (US); KODAK AKTIENGESELLSCHAFT, D-70323 Stuttgart (DE)
(72) Inventor: Beron, Winfried, D-70327 Stuttgart (DE); Reibl, Michael, D-71032 Böblingen (DE)
(74) Representative: Pohle, Reinhard, Dipl.-Phys.

(57) **Abstract**

The invention relates to a device for feeding x-ray film cassettes from a storage supply to a daylight loading and unloading unit, said device consisting of a cassette stacking device (1) which is releasably connected with the daylight loading and unloading unit (111) by a locking mechanism (17, 17a) and whose stacking planes (11a to 11k) can be aligned by means of electromechanical setting means (9) with the cassette entrance plane (112) of the loading and unloading unit (111) in any order desired.

## Description

The invention relates to a device for feeding x-ray film cassettes from a storage supply to a daylight loading and unloading unit.

Devices for the automatic loading and unloading of x-ray film cassettes are described for example in DE-PS 31 22 583 and DE-PS 37 05 851.

In the case of the apparatus known from DE-PS 31 22 583, a plurality of identically sized magazine units are provided which are arranged in a frame and contain a number of supply magazines also identically sized and adapted to be loaded with unexposed film stacks of different formats. An unloading and feeding device each associated with a supply magazine is used to remove a film from one of the supply magazines and to subsequently feed it to a film cassette. Above the supply magazines, another magazine unit is provided for receiving the x-ray film cassette.

The cassette loaded with an exposed film is unloaded and loaded by an automatic process of a type known per se.

The automatic film loading device disclosed in DE-PS 37 05 851 includes a transfer means for the loading of a sheet film cassette, said means allowing a sheet film to be removed from a selected supply magazine and subsequently the whole device to be moved up to the level of the cassette to be loaded where the film is placed in the cassette.

Both devices are disadvantageous in that only one single sheet film cassette at a time can be fed to the loading and unloading apparatus. Moreover the operator is tied to the device until the loaded cassette can be removed again.

DE-PS 37 33 191 discloses a processing and handling apparatus for x-ray film cassettes which allows cassettes to be processed to be stacked before and after they are fed to the unit concerned.

In the case of another known device (DE-PS 12 07 210) for feeding sheet film cassettes to a loading and unloading unit, a plurality of hooks is provided to which the cassettes are attached and which allow them to be loaded or unloaded as well as fed to a film processor in the order of their attachment.

Both of these apparatus are disadvantageous in that the x-ray film cassettes are fed for loading and unloading in a predetermined unchangeable order, i.e. one after the other. Moreover, the feeding operation cannot be interrupted in order that an intermediately introduced film be processed, since processing occurs in a predetermined order.

It is an object of the invention to design a device of the generic type such that both individual x-ray film cassettes can be fed in a reliable manner and a plurality of x-ray films of different formats can be fed in a freely selectible order for daylight loading and unloading.

According to the invention this object is attained in that a cassette stacking device is provided which is releasably connected with a daylight loading and unloading unit by a locking mechanism and whose stacking planes can be aligned with the cassette entrance plane of the loading and unloading unit by electromechanical setting means in any order desired.

According to a further useful modification of the invention the cassette stacking device consists of a magazine having a plurality of compartments, drivable via a threaded spindle with a toothed rim by a driving motor provided with a gear and movable along guide columns. By means of light barriers which are arranged in the side walls of the compartments at the entrance and exit sides of the cassettes and whose signals can be applied to the means controlling the device, the actual processing state of the cassette contained in each compartment can be controlled and indicated.

An aligning and transport device provided in the cassette entrance plane of the loading and unloading unit advantageously allows cassettes to be loaded into the magazine independently of the cassette format.

Further advantages of the invention can be inferred from the subclaims and from an embodiment of the invention which is described with reference to the drawing wherein:

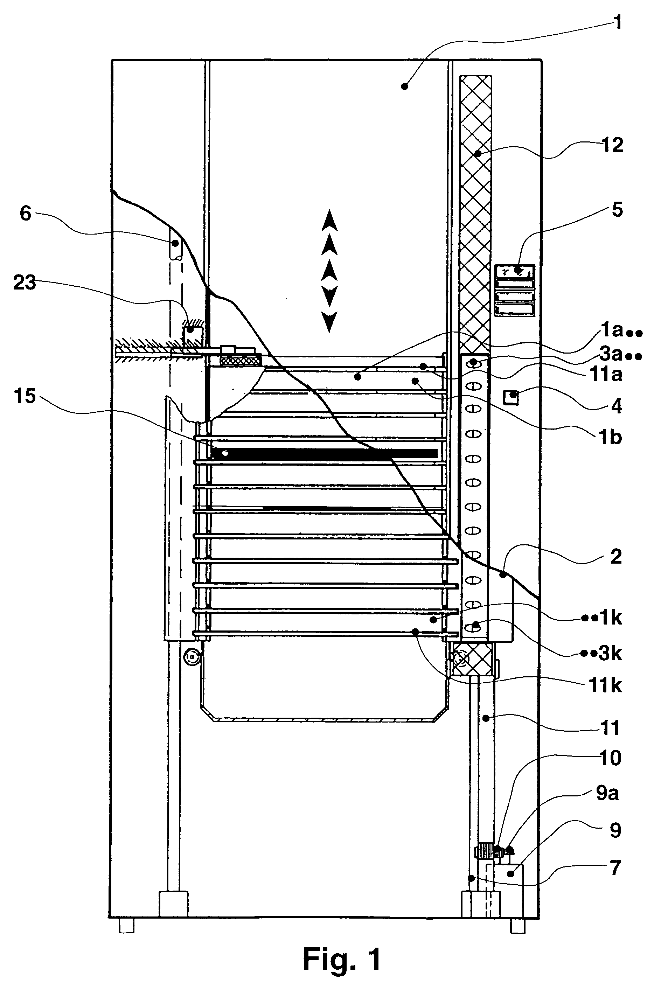

- Fig. 1: shows a partial front view of the device,

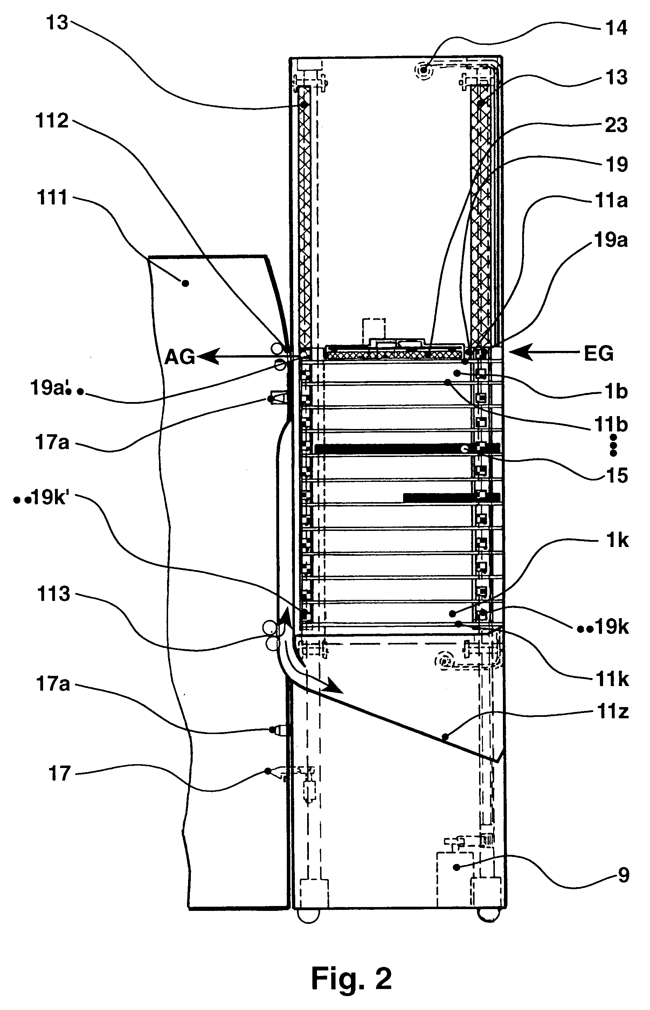

- Fig. 2: shows a lateral sectional view of the device according to Fig. 1, and

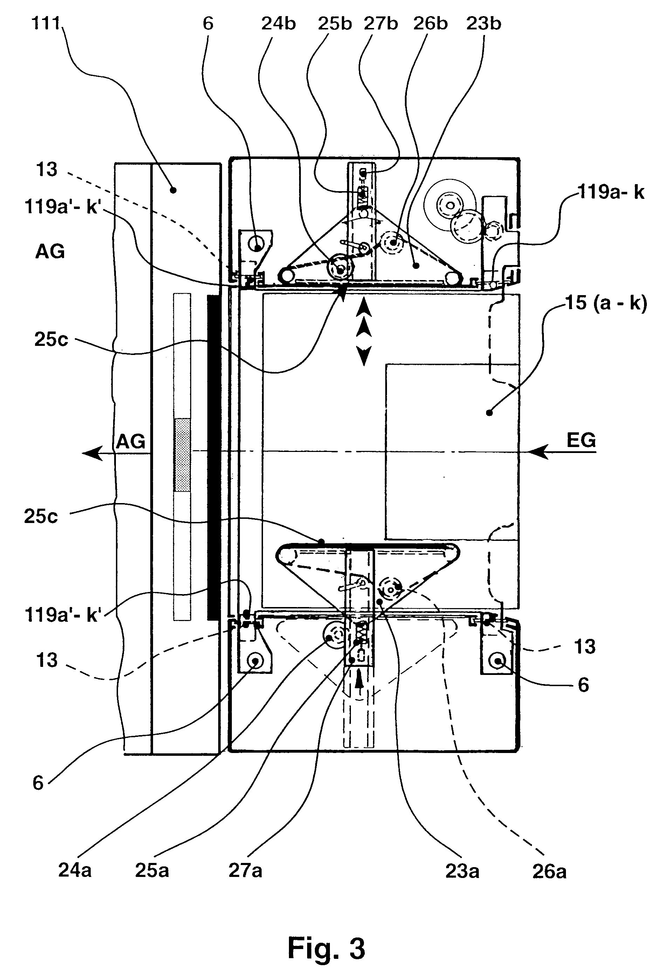

- Fig. 3: shows a sectional view of the transport and aligning unit of the device according to Fig. 1.

A stacking device 1, releasably connected with an x-ray film loading and unloading unit 111 by a locking mechanism 17, 17a, includes a magazine 2 comprising a plurality of compartments 1a to 1k. X-ray film cassettes 15a to 15k can be loaded in any order and size according to the number of compartments in the stacking planes 11a to 11k of the compartments 1a to 1k. Magazine 2 which is guidably mounted on guide columns 6 is connected with a driving motor 9 provided with a gear 9a via an idler gear 10 by means of a threaded spindle 11 having a toothed rim 16. A louver 12 windable by means of a mechanism 13 serves for covering the threaded spindle 11. At the side of magazine 2, an emergency switch 4, an operator panel 5 as well as indicator elements 3a to 3k are provided which indicate the actual operating state of the compartments 1a to 1k.

The side walls of the compartments 1a to 1k include at the cassette entrance side (direction of arrow EG) light barriers 19a to 19k and at the exit side of the cassette (direction of arrow AG) light barriers 19a' to 19k', the signals generated by said barriers being applied to a storage and control unit not illustrated.

The developed x-ray films are fed out from the loading and unloading unit 111 through an opening 113 which is connected with the exit compartment 17z of stacking device 1 by means of a guide plate 20.

On the frame of stacking device 1, a cassette transport and positioning device 23 is arranged on the level of the cassette entrance plane 112. It consists of two unconnected symmetrically designed endless belt units 23a, 23b having belt sections 25b intended for transport which are aligned in parallel with each other and disposed approximately vertically with respect to the loading and unloading unit 111 in the cassette entrance plane 112. To limit the positioning movement of the cassette, the holding means 27a, 27b of the endless belt units 23a, 23b include power clutches 25a, 25b consisting of pressure springs and switches.

When the endless belt units 23a, 23b are in their basic positions they are arranged at a maximum distance from each other and thus allow an x-ray film cassette of the maximum format to be shifted in without problem.

During operation of stacking device 1, x-ray cassettes 15 either empty or loaded with exposed film are first of all shifted in any order desired into all or some of the compartments 1a to 1k. This triggers the corresponding light barriers 19a to 19k whose signals are transmitted to the electronic control unit (not illustrated). At the same time the indicator elements 3a to 3k associated with the compartments 1a to 1k generate a "compartment occupied" signal. According to the order in which the cassettes are introduced the control unit controls magazine 2 via motor 9 such that the stacking planes 11a to 11k are each aligned with the cassette entrance plane 112 of the loading and unloading unit 111.

When the stacking plane 1a is located on the level of the cassette entrance plane 112 the control unit switches off motor 9 and switches on the positioning motors 24a, 24b of the endless belt units 23a, 23b. Positioning of the cassette by means of the units 23a, 23b is terminated when the power clutches 25a, 25b arranged in the holding elements 27a, 27b transmit a corresponding signal to the control unit. At the same time the belt driving motors 26a, 26b are switched on so that the cassette is fed into the loading opening of loading and unloading unit 111.

As soon as the light interrupting action of light barrier 19a' has been terminated by the introduction of the cassette, the belt driving motors 26a, 26b are switched off by the control unit, while the motors 24a, 24b are simultaneously switched on so that the endless belt units 23a, 23b assume their initial positions. The indicator element 3a associated with compartment 1a signalizes "cassette in compartment being processed", the compartment being additionally lockable by a locking mechanism in order that no other cassettes can be fed in.

Sensing of the cassette and film format respectively, opening of the cassette, removal of the film, transport to the film processing unit and subsequent delivery through opening 113 into exit compartment 11z, loading of a new, unexposed film according to the cassette format determined, closing of the cassette, and feeding out of the cassette through cassette loading plane 112 into compartment 1a are operations effected in the loading and unloading unit 111 in a manner known from the prior art, e.g. DE-PS 37 05 851.

As a result of the light barrier 19a' being triggered once again the control unit is caused to switch on the positioning motors 24a, 24b and the belt driving motors 26a, 26b with reversed directions of rotation. When cassette 15a has been transported by the transport belt to its end position in compartment 1a, which operation is controlled by light barrier 19a, the belt driving motors 26a, 26b are switched off, and under the action of the control unit, the endless belt units 23a, 23b are returned by the motors 24a, 24b to their initial positions.

Advantageously, the control unit of stacking device 1 is designed such that when a cassette is positioned in one of the compartments 1a to 1k, said particular cassette is addressed and processed. When all cassettes stored in magazine 2 have been completely processed the magazine 2 is moved to its lowermost position so that the opening on cassette entrance plane 112 of the loading and unloading unit is accessible and cassettes can be individually fed in via compartment 1a.

When the emergency switch 4 arranged at the front side of stacking device 1 is operated, automatic processing of the cassettes can be interrupted so that the cassette which is just being handled is only delivered after it has been processed. Magazine 2 is subsequently transferred to its lowermost position so that a further cassette can be introduced whereupon automatic operation of the apparatus is resumed.

## Claims

1. Device for feeding x-ray film cassettes from a storage supply to a daylight loading and unloading unit (111), **characterized** by a cassette stacking device (1) which is releasably connected with a daylight loading and unloading unit (111) by a locking mechanism (17, 17a) and whose stacking planes (11a to 11k) can be aligned with the cassette entrance plane (112) of the loading and unloading unit (111) by electromechanical setting means (9) in any order desired.

2. Device according to claim 1, characterized in that the cassette stacking device (1) consists of a magazine (2) which includes a plurality of compartments (1a to 1k), is drivable via a threaded spindle (11) with a toothed rim (16) by a driving motor (9) provided with a gear (9a), and is movable along guide columns (6).

3. Device according to claim 2, characterized in that in the side walls of each compartment (1a to 1k), light barriers (19a to 19k) are arranged at the cassette entrance side (EG) and light barriers (19a' to 19k') are arranged at the cassette exit side, the signals generated by said light barriers being applicable to an electronic storage and control unit.

4. Device according to claim 1, characterized in that a positioning and transport device (23) allowing cassettes to be fed independently of their formats is arranged on the stacking device (1) in the cassette entrance plane (112) of the loading and unloading unit (111).

5. Device according to claims 1 and 4, characterized in that the positioning and transport device (23) is composed of two unconnected, horizontally movable endless belt units (23a, 23b) having belt sections (25c) for positioning and transporting the cassette which are disposed parallel to each other and approximately at right angles to the loading and unloading unit (111) in the cassette entrance plane (112).

6. Device according to claims 1, 4 and 5, characterized in that the horizontal displacement of the endless belt units (23a, 23b) is limited by power clutches (25a, 25b) arranged in the displacement path and in that the endless belt drives (26a, 26b) can be switched on and off.
